# EUROPÄISCHE PATENTSCHRIFT

(11) **EP 0 656 815 B1**
(45) Veröffentlichungstag und Bekanntmachung des Hinweises auf die Patenterteilung: **25.09.1996**
(21) Anmeldenummer: 93918889.2
(22) Anmeldetag: 19.08.1993
(51) Int. Cl.: B03B 5/52, B03B 9/06, B03B 11/00, B07B 1/20

(54) **FÖRDERVORRICHTUNG FÜR BEIM WIEDERAUFBEREITEN VON RESTBETON ANFALLENDE ZUSCHLAGSTOFFE**
CONVEYOR FOR AGGREGATES PRODUCED DURING REPROCESSING OF RESIDUAL CONCRETE
CONVOYEUR POUR AGREGATS PRODUITS LORS DU TRAITEMENT DE BETON RESIDUEL

(30) Priorität: 25.08.1992 DE 9211395 U
(43) Veröffentlichungstag der Anmeldung: 14.06.1995
(73) Patentinhaber: Brenner, Horst, 71717 Beilstein (DE)
(72) Erfinder: Brenner, Horst, 71717 Beilstein (DE)
(74) Vertreter: Gleiss, Alf-Olav, Dr.jur. Dipl.-Ing.
(86) Internationale Anmeldenummer: DE9300746
(87) Internationale Veröffentlichungsnummer: WO9404276

(56) Entgegenhaltungen:
- DE-A- 2 362 674
- DE-U- 9 100 176
- DE-U- 9 211 395
- FR-A- 836 649
- FR-A- 2 321 333
- NL-A- 8 005 764
- US-A- 3 886 063

## Beschreibung

### TECHNISCHES GEBIET

Die Erfindung betrifft eine Vorrichtung zum Herausführen der Zuschlagstoffe aus einer Wiederaufbereitungsanlage von Restbeton gemäß dem Oberbegriff von Anspruch 1.

Die Wiederaufbereitung von nicht verbrauchten Restbetonmengen in betonverarbeitenden bzw. transportierenden Betrieben wird aus Gründen des Umweltschutzes in immer stärkerem Maße erforderlich. Darüber hinaus bringt eine Wiederaufbereitung auch große wirtschaftliche Vorteile, da die als Restbeton anfallenden Bestandteile wie die Kies- und Sandbestandteile und das beim Wiederaufbereiten verwendete Wasser bei der Herstellung von neuem Beton wieder verwendet werden können.

### STAND DER TECHNIK

Aus dem deutschen Gebrauchsmuster 91 00 176 ist eine derartige Fördervorrichtung in Art eines Schneckenförderers bekannt. Die Förderrinne dieses Schneckenförderers ist als flexible, elastische Bahn ausgebildet. Die Fördereinrichtung ragt mit ihrem unteren Ende in den zur Wiederaufbereitung von Restbeton verwendeten Behälter hinein. Der Schneckenförderer fördert die gereinigten Betonzuschlagstoffe, d. h. die Sand- und Kiesbestandteile nach schräg oben aus dem Behälter heraus. Dadurch wird eine angestrebte hohe Abwurfhöhe der Zuschlagstoffe ermöglicht. Das beim Austragen der Zuschlagstoffe mit aus dem Schneckenförderer herausgeförderte Recycling-Wasser fließt rückwärts wieder in den Behälter hinein. Dadurch, daß die Welle dieses Schneckenförderers außerhalb des Aufnahmebereiches der herauszufördernden Sand- und Kiesbestandteile gelagert ist, kommt die Welle nicht mit dem Fördergut und praktisch auch nicht mit dem Recycling-Wasser in Berührung. Dadurch ist ein hohes Maß an Wartungsfreiheit dieses Schneckenförderers bei gleichzeitig hoher Funktionalität gewährleistet. Bei diesem Schneckenförderer fallen die Sand- und Kiesbestandteile in sich vermischt an.

### DARSTELLUNG DER ERFINDUNG

Ausgehend von diesem vorbekannten Stand der Technik liegt der Erfindung die Aufgabe zugrunde, eine Möglichkeit zum Wiederaufbereiten von Restbeton anzugeben, mit der sich die einzelnen Kornfraktionen der wiederaufbereiteten Zuschlagstoffe, d. h. insbesondere die Sand- und Kiesbestandteile, auf möglichst wirtschaftliche Weise voneinander separieren lassen.

Diese Erfindung ist in den Merkmalen des Patentanspruchs 1 gegeben. Damit wird erreicht, daß oben aus dem Schneckenförderer beispielsweise die Kiesbestandteile und damit die im Durchmesser größeren Korngrößen der recycelbaren Zuschlagstoffe anfallen, während an einer anderen Stelle des Schneckenförderers eine kleinere Korngröße, d. h. beispielsweise die Sandbestandteile der recycelten Zuschlagstoffe getrennt von den Kiesbestandteilen aus dem Schneckenförderer herausfallen. Damit ist es mit äußerst minimalem Aufwand möglich, die Kies- und Sandbestandteile der beim Wiederaufbereiten von Restbeton anfallenden Zuschlagstoffe voneinander zu trennen. Auf diese Weise kann beim Wiederverwenden dieser Zuschlagstoffe eine optimale Kornzusammensetzung des neu herzustellenden Betons sichergestellt werden.

Siebanlagen zum Trennen von unterschiedlichen Kornfraktionen sind im Zusammenhang mit der Gewinnung von Sand und Kies aus Sand- und Kiesgruben bekannt. Der Verwendung dieser Siebanlagen bei der Wiederaufbereitung von Restbeton stehen wirtschaftliche Überlegungen entgegen, da derartige Siebanlagen die Kosten einer Wiederaufbereitungsanlage von Restbeton stark erhöhen würden. Andererseits ist die Verwendung dieser Siebanlagen auch aus konstruktiven Gründen ohne größeren zusätzlichen Aufwand in aller Regel nicht möglich. So müßten diese Siebanlagen unterhalb des Schneckenförderers angeordnet werden, was zur Folge hätte, daß die Fördereinrichtung im Bereich dieser Siebanlage ausreichend hoch oberhalb des Erdbodens vorhanden sein müßte. Es müßte nämlich für die aus der Siebanlage nach unten herausfallenden Kornfraktionen noch ausreichend Fallhöhe zum Lagern dieser Materialien vorhanden sein. Im Gegensatz dazu kann mit der erfindungsgemäßen Vorrichtung auf konstruktiv aufwendige Siebanlagen, die eine entsprechende Bauhöhe beinhalten, verzichtet werden.

Sofern die aus dem Schneckenförderer nach unten herausfallenden Zuschlagstoffe an einer anderen Stelle als genau unterhalb des Schneckenförderers gelagert werden sollen, kann eine weitere Fördereinrichtung entsprechend unterhalb dieses Schneckenförderers positioniert werden. Von diesem Schneckenförderer können dann die aus den Öffnungen des oberhalb positionierten Schneckenförderers herausfallenden Zuschlagstoffe an einen beliebigen anderen Ort transportiert werden. Diese unterhalb angeordnete, weitere Fördereinrichtung kann ebenfalls ein Schneckenförderer sein.

Im vorliegenden Fall wird davon ausgegangen, daß aus dem oberen, ersten Schneckenförderer die Kiesbestandteile und aus dem unteren, zweiten Schneckenförderer eine zweite Kornfraktion, die Sandbestandteile getrennt voneinander aus dem beim Wiederaufbereiten von Restbeton verwendeten Behältnis gewonnen werden können. Sofern die aus dem Behältnis gewonnenen Zuschlagstoffe nicht nur in zwei sondern in mehr Kornfraktionen getrennt werden sollen, können entsprechend mehrere untereinander angeordnete Fördereinrichtungen angeordnet werden. Bei diesen mehreren Fördereinrichtungen müssen dann die Öffnungen entsprechend der Korngröße der jeweils hindurchfallenden Zuschlagstoffe unterschiedlich groß sein. Die Durchmesser der Öffnungen werden nach "unten" hin, d. h. zu den unteren Fördereinrichtungen hin, entsprechend kleiner. Die untereinander angeordneten Fördereinrichtungen müssen nicht mit ihren Öffnungen genau untereinander angeordnet sein. Durch die Verwendung von ansteigenden Fördereinrichtungen wie Schneckenförderer können die Bereiche mit den Öffnungen im Grundriß betrachtet bei den verschiedenen Fördereinrichtungen versetzt zueinander im Raum angeordnet sein. So ist es durch entsprechende Anordnung von schräg im Raum angeordneten Schneckenförderern möglich, die Öffnungen in den jeweiligen Förderrinnen auch in gleicher gegenseitiger Höhe anzuordnen.

Die mehreren Schneckenförderer können beliebig im Raum angeordnet sein; es ist aus Platzgründen beispielsweise auch möglich, die vorzugsweise zwei Fördereinrichtungen untereinander zu positionieren. Dadurch wird extrem wenig Raum im Umkreis der Wiederaufbereitunganlage benötigt. Die Abwurfhöhe beim unteren Schneckenförderer wäre dann allerdings niedriger als die beim oberhalb angeordneten Schneckenförderer.Dies wiederum ließe sich durch in der Horizontale abgewinkelte Schneckenförderer vermeiden.

Um auch das Recycling-Wasser, das beim Herausfördern der Zuschlagstoffe auf die oberste Fördereinrichtung und durch deren Öffnung hindurch auf die jeweils darunter angeordneten Fördereinrichtungen mit anfällt, nicht ungenutzt in das Abwasserleitungssystem einzuleiten, können alle Fördereinrichtungen über eine Leitungsverbindung mit dem bei der Wiederaufbereitung von Restbeton benutzten Behältnis verbunden sein. Dieses Recycling-Wasser fließt dann immer wieder in dieses Behältnis zurück. Dieses Behältnis kann ein auf dem Erdreich aufruhender sogenannter Auswaschtrog oder ein beispielsweise in das Erdreich eingelassenes Becken sein.

Um den Durchtritt der Zuschlagstoffe durch die Öffnungen hindurch zu erleichtern, hat es sich als vorteilhaft herausgestellt, die mit Öffnungen versehenen Bahnbereiche des betreffenden Schneckenförderers mit Wasser zu beaufschlagen. Dieses Wasser kann Fremdwasser sein; es ist allerdings auch möglich, dieses Wasser dem zur Wiederaufbereitung von Restbeton verwendeten Behältnis zu entnehmen, so daß dieses Wasser dann sogenanntes Recycling-Wasser wäre.

Die bei der Fördereinrichtung im vorstehenden bezeichneten Öffnungen sind insbesondere schlitzartig ausgebildet. Diese Schlitze verhindern im Zusammenwirken mit der flexiblen elastischen Bahn, in der sie vorhanden sind, daß Zuschlagstoffe in den Öffnungen sich verklemmen und damit nicht durch die Öffnungen hindurchfallen können. Die als flexible elastische Bahn ausgebildete Förderrinne wird beim Betrieb des Schneckenförderers mehr oder weniger walgartig hin- und herbewegt, so daß die Schlitze, sollten sie sich durch ein Korn versperrt haben, immer wieder selbsttätig freigemacht werden.

Damit Körner sich erst gar nicht in den Schlitzen verklemmen können, sind diese Schlitze vorzugsweise quer, insbesondere senkrecht zur Förderrichtung der Zuschlagstoffe in der Bahn ausgerichtet.

Bei dem üblicherweise anfallenden Restbeton hat sich eine Schlitzgröße von etwa 2 bis 4 mm in der Breite und 10 bis 20 mm in der Länge als optimal herausgestellt, um die Sandbestandteile aus dem Sand-Kies-Gemenge auszusondern.

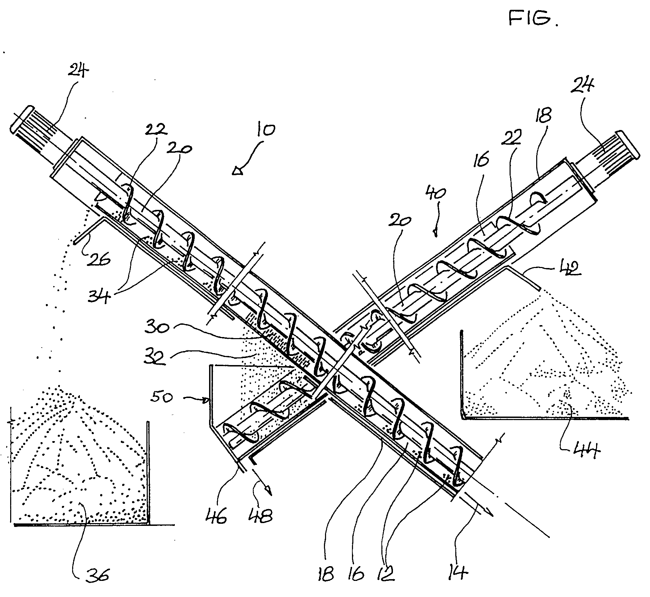

### KURZE BESCHREIBUNG DER ZEICHNUNG

Im folgenden wird die Erfindung anhand eines Ausführungsbeispiels näher beschrieben und erläutert. Die einzige Figur zeigt in schematischer Darstellung zwei, mit Teilbereichen übereinander angeordnete Fördereinrichtungen nach der Erfindung.

### WEGE ZUR AUSFÜHRUNG DER ERFINDUNG

Aus einem nicht dargestellten Behältnis zum Wiederaufbereiten von Restbeton ragt ein erster Schneckenförderer 10 schräg nach oben heraus. Mit Hilfe dieses Schneckenförderers 10 werden Sand- und Kiesbestandteile 12 sowie geringe Mengen an Wasser, welche Bestandteile beim Wiederaufbereiten von Restbeton in besagtem Behältnis anfallen, nach schräg oben aus diesem Behältnis herausgefördert.

Das auf den Schneckenförderer 10 gelangende Wasser fließt wieder rückwärts in dieses Behältnis hinein, was mit dem Pfeil 14 angedeutet ist.

Der Schneckenförderer 10 besitzt eine als flexible elastische Bahn 16 ausgebildete Förderrinne. Diese Förderrinne ist von einem Gehäuse 18 umgeben. Das Fördern der Sand- und Kiesbestandteile 12 erfolgt mit Hilfe einer um eine Welle 20 umlaufenden Gewindeschaufel 22. Die Welle 20 wird von einem am oberen Ende des Schneckenförderers 10 vorhandenen motorischen Drehantrieb 24 in Umdrehung versetzt. Unterhalb dieses Drehantriebs 24 ist eine Auswurföffnung 26 vorhanden, aus der die dort ankommenden Zuschlagstoffe aus dem Schneckenförderer 10 nach unten herausfallen.

Im mittleren Bereich dieses Schneckenförderers 10 ist das Gehäuse 18 unterbrochen.In diesem Bereich sind in der Bahn 16 eine größere Anzahl von Schlitzen 30 vorhanden. Diese Schlitze 30 sind in ihrer Längsausrichtung im vorliegenden Beispielsfall quer zur Längsausrichtung des Schneckenförderers 10 angeordnet. Die Schlitze könnten auch in einer anderen Längsausrichtung vorhanden sein. Die Breite der Schlitze 30 ist so groß, daß nur die Sandbestandteile 32 des auf dem Schneckenförderer 10 vorhandenen Sand-Kies-Gemisches 12 hindurchfallen können. Diese Sandbestandteile 32 fallen von oben auf einen zweiten Schneckenförderer 40, der ähnlich wie der erste Schneckenförderer 10 ausgebildet ist. Oberhalb der Schlitze 30 sind in dem Schneckenförderer 10 damit nur noch Kiesbestandteile 34 vorhanden, die dann oben aus dem Schneckenförderer 10 herausfallen. Unterhalb der Auswurföffnung 26 des Schneckenförderers 10 bildet sich damit ein Kieshaufen 36, der praktisch keine Sandbestandteile mehr enthält.

Der Sand 32 fällt nach unten im Bereich der Schlitze 30 aus dem Schneckenförderer 10 heraus und auf einen zweiten Schneckenförderer 40. Dieser Schneckenförderer 40 ist ähnlich wie der erste Schneckenförderer 10 aufgebaut. Auch er besitzt eine zentrale Welle 20, die von einer schraubförmige umlaufenden Gewindeschaufel 22 umgeben ist. Am oberen Ende dieses Schneckenförderers 40 ist wiederum ein motorischer Drehantrieb 24 vorhanden. Unterhalb dieses Bereiches mit dem Drehantrieb 24 ist eine Auswurföffnung 42 vorhanden, aus der die dorthin gelangenden Kornfraktionen aus dem Schneckenförderer 40 nach unten herausfallen. Diese Kornfraktionen sind im vorliegenden Fall die Sandbestandteile 32, die aus dem Schneckenförderer 10 herausgefallen sind. Unterhalb der Auswurföffnung 42 bildet sich somit ein Sandhaufen 44.

Bei dem Schneckenförderer 40 ist die flexible elastische Bahn 16, die die Gewindeschaufel 22 umgibt, nicht mit Öffnungen versehen, so daß die unten in den Schneckenförderer 40 hineinfallenden Sandbestandteile 32 auch oben aus dem Schneckenförderer 40 wieder vollständig herausfallen können. Im unteren Bereich des Schneckenförderers 40 ist lediglich eine Ausflußöffnung 46 vorhanden, an die eine zur Wiederaufbereitungsanlage hinführende Wasserleitung angeschlossen werden kann. Dadurch kann das durch die Schlitze 30 des Schneckenförderers 10 zusammen mit dem Sand 32 hindurchgeströmte Wasser, das in den Bereich des Schneckenförderers 40 gelangt ist, aus dem Schneckenförderer 40 wieder herausgefördert und in das zur Wiederaufbereitung von Restbeton vorgesehene Behältnis zurückgeführt werden. Diese Wasserleitung ist schematisch durch den Pfeil 48 dargestellt.

Die Ausflußöffnung 46 ist so ausgestaltet und angeordnet, daß nur Wasser und nicht auch Sandbestandteile 32 durch sie hindurchgelangen können.

In Nachbarschaft zur Öffnung 46 kann so beispielsweise innerhalb der Bahn 20 des Schneckenförderers 40 eine Anzahl von ausreichend kleinen Löchern vorhanden sein, so daß durch die Bahn 16 hindurch und damit durch die Löcher hindurch lediglich Wasser in den Bereich der Öffnung 46 gelangen können. Es ist auch möglich, statt dieser Löcher in der Bahn 16 einen Überlauf in dem Einfülltrichter 50 des Schneckenförderers 40 vorzusehen.

Die räumliche Ausrichtung der Schneckenförderer 10, 40 hängt von den örtlichen Gegebenheiten und davon ab, wo Kieshaufen 36 und Sandhaufen 44 im Gelände außerhalb der Wiederaufbereitungsanlage gelagert werden sollen. Die beiden Schneckenförderer 10, 40 können auch mit ihrer Längsausrichtung untereinander angeordnet sein. Sie brauchen auch nicht geradlinig sondern können im Raum beliebig gekrümmt oder abgewinkelt ausgebildet sein.

Sofern nicht nur wie im vorliegenden Fall zwei sondern mehr Kornfraktionen voneinander separiert werden sollen, müssen entsprechend mehrere Schneckenförderer untereinander angeordnet werden. So könnte der Schneckenförderer 40 wie der Schneckenförderer 10 mit Schlitzen 30 in seiner flexiblen elastischen Bahn ausgestattet sein, so daß dann unterhalb des Schneckenförderers 40 ein weiterer Schneckenförderer vorhanden sein könnte, der dann die dritte Kornfraktion, die kleiner als die Sandfraktion wäre, auffangen und wegtransportieren könnte.

## Patentansprüche

1. Vorrichtung zum Herausführen der Zuschlagstoffe, die beim Wiederaufbereiten von Restbeton in einem Behältnis angefallen sind, wobei
- diese Vorrichtung eine erste Fördereinrichtung (10) in Art eines Schneckenförderers aufweist,
- die Förderrinne dieses Schneckenförderers (10) als flexible elastische Bahn (16) ausgebildet ist,
- in dieser Bahn (16) Öffnungen (30) vorhanden sind, die zum Durchtritt keiner größeren als einer vorgegebenen Korngroße der von dem Schneckenförderer (10) herausgeforderten Zuschlagstoffe (12) geeignet sind,
- der mit den Öffnungen (30) versehene Bahnbereich des Schneckenförderers (10) mit zusätzlichem Wasser beaufschlagbar ist,
**dadurch gekennzeichnet,** daß
- zumindest eine weitere Fördereinrichtung (40) so unterhalb des Schneckenförderers (10) beliebig im Raum ausgerichtet vorhanden ist, daß die durch die Öffnungen (30) hindurchfallende zumindest eine Kornfraktion (32) von dieser Fördereinrichtung (40) wegtransportierbar ist,
- alle Fördereinrichtungen (10, 40) eine Wasserleitung (14, 48) in das Behaltnis hinein besitzen, durch die das aus dem Behältnis zusammen mit den Zuschlagstoffen herausgeförderte Wasser wieder in das Behaltnis zurückleitbar ist,
- die weitere Fördereinrichtung (40) einen Einfülltrichter (50) mit einem Wasserüberlauf besitzt,
- dieser Überlauf mit der Wasserleitung (48) leitungsmässig verbunden ist, die in das Behältnis zurückführt.

2. Vorrichtung nach Anspruch 1,
**dadurch gekennzeichnet,** daß
die zumindest eine weitere Fördereinrichtung (40) ebenfalls ein Schneckenförderer ist.

3. Vorrichtung nach Anspruch 1,
**dadurch gekennzeichnet,** daß
dieses Wasser Frischwasser und/oder dem Behältnis entnommenes Wasser ist.

4. Vorrichtung nach einem der vorstehenden Ansprüche,
**dadurch gekennzeichnet,** daß
die Öffnungen (30) Schlitze sind.

5. Vorrichtung nach Anspruch 4,
**dadurch gekennzeichnet,** daß
die Schlitze (30) quer zur Förderrichtung des Schneckenförderers (10) ausgerichtet sind.

## Claims

1. An apparatus for conveying away the aggregates which have accumulated in a receptacle during the reprocessing of residual concrete,
- this apparatus having a first conveying device (10) in the form of a screw conveyor,
- the conveyor trough of this screw conveyor (10) being in the form of a flexible resilient surface (16),
- in this surface (16) there being openings (30) which do not allow the passage of aggregates (12) conveyed away by the screw conveyor (10) whose grain size is greater than a predetermined grain size,
- the screw conveyor surface region provided with the openings (30) being able to be acted upon by additional water,
characterised in that
- at least one additional conveying device (40) is located, with any spatial orientation, below the screw conveyor (10), in such a manner that the at least one size fraction (32) falling through the openings (30) can be transported away by this conveying device (40),
- all conveying devices (10, 40) have a water conduit (14, 48) into the receptacle, the water conveyed out of the receptacle together with the aggregates being able to be returned to the receptacle again through this water conduit,
- the additional conveying device (40) has a feeding hopper (50) with a water overflow,
- this overflow is conductively connected to the water conduit (48) which leads back into the receptacle.

2. An apparatus in accordance with Claim 1, characterised in that the at least one additional conveying device (40) is also a screw conveyor.

3. An apparatus in accordance with Claim 1, characterised in that this water is make-up water and/or water removed from the receptacle.

4. An apparatus in accordance with any one of the preceding Claims, characterised in that the openings (30) are slits.

5. An apparatus in accordance with Claim 4, characterised in that the slits (30) are directed transversely to the conveying direction of the screw conveyor (10).

## Revendications

1. Dispositif d'extraction des granulats collectés dans un récipient lors du traitement de béton résiduel, dans lequel,
- il est prévu un premier dispositif de transport (10) du type transporteur à vis,
- la gouttière de ce transporteur (10) est constituée par une conduite flexible élastique (16),
- la conduite (16) présente des ouvertures (30) prévues pour ne laisser passer, parmi les granulats (12) véhiculés par le transporteur à vis (10), que ceux ne dépassant pas une certaine granulométrie,
- la zone de la conduite du transporteur (10) où se trouvent les ouvertures peut recevoir de l'eau additionnelle,
dispositif caractérisé en ce qu'
- il est prévu au moins un autre dispositif de transport (40) disposé en dessous du transporteur à vis (10) et orienté de manière qu'au moins la fraction granulométrique (32) traversant les ouvertures (30) est évacuée par ce transporteur (40),
- tous les dispositifs de transport (10, 40) possèdent une canalisation d'eau (14, 48) aboutissant au récipient de manière à ramener à celui-ci l'eau qui en a été extraite avec les granulats,
- le second dispositif de transport (40) comporte une trémie d'alimentation (50) équipée d'un déversoir de trop-plein d'eau ,
- ce déversoir est relié à la canalisation (48) de retour de l'eau au récipient.

2. Dispositif selon la revendication 1,
caractérisé en ce qu'
au moins un des autres dispositifs (40) est également un transporteur à vis.

3. Dispositif selon la revendication 1,
caractérisé en ce que
l'eau est de l'eau fraîche et/ou de l'eau reprise dans le récipient.

4. Dispositif selon une des revendications précédentes
caractérisé en ce que
les ouvertures (30) sont des fentes.

5. Dispositif selon la revendication 4,
caractérisé en ce que
les fentes (30) sont transversales à la direction de déplacement du transporteur à vis (10).
